# EUROPÄISCHE PATENTSCHRIFT

(11) **EP 3 247 889 B1**
(45) Veröffentlichungstag und Bekanntmachung des Hinweises auf die Patenterteilung: **17.10.2018**
(21) Anmeldenummer: 16701170.9
(22) Anmeldetag: 21.01.2016
(51) Int. Cl.: F01N 3/20, F01N 3/36, F01N 3/28, F01N 3/10, F01N 13/00

(54) **ABGASREINIGUNGSKOMPONENTE ZUR REINIGUNG DER ABGASE EINER VERBRENNUNGSKRAFTMASCHINE**
EXHAUST GAS PURIFICATION DEVICE FOR PURIFYING EXHAUST GAS OF AN INTERNAL COMBUSTION ENGINE
DISPOSITIF DE PURIFICATION DE GAZ D'ÉCHAPPEMENT POUR DÉPOLLUER LE GAZ D'ÉCHAPPEMENT D'UN MOTEUR À COMBUSTION INTERNE

(30) Priorität: 23.01.2015 DE 102015201193
(43) Veröffentlichungstag der Anmeldung: 29.11.2017
(73) Patentinhaber: Continental Automotive GmbH, 30165 Hannover (DE)
(72) Erfinder: NAGEL, Thomas, 51766 Engelskirchen (DE); BOHNE, Frank, 39171 Sülzetal (DE)
(86) Internationale Anmeldenummer: PCT/EP2016/051269
(87) Internationale Veröffentlichungsnummer: WO 2016/116579

(56) Entgegenhaltungen:
- WO-A1-2012/073068
- DE-A1-102008 001 212
- DE-A1-102010 034 705
- US-A1- 2011 107 743
- US-A1- 2014 216 030
- US-B1- 6 444 177

## Beschreibung

Die Erfindung betrifft eine Abgasreinigungskomponente zur Reinigung der Abgase einer Verbrennungskraftmaschine, die dazu dient, ein flüssiges Abgasreinigungsadditiv einer Abgasbehandlungsvorrichtung zuzuführen. Die Abgasreinigungskomponente ist insbesondere ein Abschnitt einer Abgasleitung einer Abgasbehandlungsvorrichtung, welcher in eine Abgasleitung einer Abgasbehandlungsvorrichtung eingesetzt werden kann bzw. welcher einen Abschnitt einer Abgasleitung bildet.

Als Abgasreinigungsadditiv wird einer Abgasbehandlungsvorrichtung beispielsweise Kraftstoff oder Reduktionsmittel zur Durchführung des Verfahrens der selektiven katalytischen Reduktion (SCR-Verfahren, SCR = Selective Catalytic Reduction) zugeführt. Bei diesem SCR-Verfahren werden Stickstoffoxidbestandteile im Abgas unter Zuhilfenahme des Reduktionsmittels zu unschädlichen Substanzen reduziert. Das Reduktionsmittel ist typischerweise Harnstoff-Wasser-Lösung, welche im Abgas zu Ammoniak umgesetzt wird kann. Die Stickstoffoxidverbindungen im Abgas reagieren dann mit dem Ammoniak zu unschädlichen Substanzen (insbesondere zu CO₂, H₂O und N₂). Eine 32,5 prozentige Harnstoff-Wasser-Lösung ist als flüssiges Abgasreinigungsadditiv unter dem Handelsnamen AdBlue® erhältlich.

Problematisch bei der Zugabe von flüssigen Abgasreinigungsadditiven zum Abgas einer Verbrennungskraftmaschine ist insbesondere, dass flüssige Abgasreinigungsadditive verdampfen müssen, um in dem Abgas in der Abgasbehandlungsvorrichtung wirken zu können. Es ist bekannt, dass flüssige Additive fein zerstäubt zugegeben werden, um die Verdampfung der flüssigen Abgasreinigungsadditive zu verbessern. Ebenfalls ist bekannt, heiße Auftreffstrukturen innerhalb einer Abgasbehandlungsvorrichtung vorzusehen, auf welche Abgasreinigungsadditive auftreffen, um von dort aus zu verdampfen. Problematisch ist es allerdings, entsprechende Auftreffflächen in einer Abgasbehandlungsvorrichtung vorzusehen, die frühzeitig nach Inbetriebnahme einer Verbrennungskraftmaschine bereits ausreichend hohe Temperaturen aufweisen, um eine sichere Verdampfung des flüssigen Abgasreinigungsadditivs zu gewährleisten. Dies gilt insbesondere für Harnstoff-Wasser-Lösung als flüssigem Abgasreinigungsadditiv.

Die EP 2865 858 A1 offenbart eine Vorrichtung und eine Methode zur Behandlung von Abgas. Hierbei ist ein katalytischer Konverter in einer Abgasleitung angeordnet. Weiterhin ist ein Injektor vorgesehen, über welchen eine Substanz in die Abgasleitung eingespritzt werden kann. Weiterhin weist die Vorrichtung eine Bypass-Leitung auf, die einen Teil des katalytischen Konverters umgeht. Eien Einspritzung der Substanz kann beispielsweise in dieser Bypass-Leitung erfolgen.

Die EP 1 857 648 A1 zeigt eine Vorrichtung und eine Methode zur Verbesserung der Emissionskontrolle eines Verbrennungsmotors. Die Vorrichtung weist eine Stickstoff-Oxid Speichereinheit auf und einen Kraftstoffprozessor. Der Kraftstoffprozessor ist dabei stromaufwärts von der Stickstoff-Oxid Speichereinheit angeordnet. Im Kraftstoffprozessor kann Kraftstoff in ein Gas mit Reduktionswirkung umgewandelt werden, welches in die Stickstoff-Oxid Speichereinheit zugeführt wird und dort zu einer Regeneration des Adsorbers in der Stickstoff-Oxid Speichereinheit führt.

Die US 2010 / 0 263 352 A1 offenbart ein Abgassystem mit einer Katalysatorbaugruppe. Wobei ein erster Katalysator ein Methan-Oxidierungs-Katalysator ist und ein zweiter Katalysator ein selektiv katalytischer Katalysator ist. Der erste Katalysator ist stromaufwärts des zweiten Katalysators angeordnet.

Die US 6 444 177 B1 zeigt einen Prozess und eine Vorrichtung zur katalytischen Reinigung eines Abgases, welches aus einer Verbrennung erzeugt wird. Das zu reinigende Abgas wird in eine Umwandlungs- und Mischleitung eingeleitet, wobei das Abgas die Leitung durchströmt. Weiterhin wird ein Reduktionsmittel in das Abgas eingespritzt. Das Abgas wird dann in eine Reduktionsleitung umgelenkt, welche parallel oder koaxial um die Umwandlungs- und Mischleitung angeordnet ist. Der Abgasstrom strömt in der Reduktionsleitung in einer Richtung entgegengesetzt zur Umwandlungs- und Mischleitung.

Eine bekannte Methode zum Verbessern der Verdampfung von flüssigen Abgasreinigungsadditiven in Abgasbehandlungsvorrichtungen sind beispielsweise auch Heizungen innerhalb der Abgasbehandlungsvorrichtung, mit welchen das Abgas oder die weiter oben beschriebenen Auftreffstrukturen gezielt beheizt werden können. Heizungen sind insbesondere vorteilhaft, um eine ausreichende Verdampfung von Abgasreinigungsadditiven während der Kaltstartphase einer Verbrennungskraftmaschine zu erreichen, wenn mit der Temperatur der Abgase alleine noch keine ausreichende Verdampfung sichergestellt werden kann.

Eine Abgasreinigungskomponente gemäß dem Oberbegriff des Anspruchs 1 ist aus der Schrift US 2014/0216030A bekannt.

Problematisch bei der Zugabe von flüssigen Abgasreinigungsadditiven ist insbesondere die Bildung von Ablagerungen, die sich bei Harnstoff-Wasser-Lösung als Abgasreinigungsadditiv insbesondere in Form von festen Harnstoffausscheidungen bilden können, wenn die Harnstoff-Wasser-Lösung nicht ausreichend verdampft.

Hiervon ausgehend ist es Aufgabe der hier vorliegenden Erfindung, die geschilderten technischen Probleme zu lösen bzw. zumindest zu lindern. Es soll insbesondere eine besonders vorteilhafte Abgasreinigungskomponente vorgestellt werden, mit welcher ein flüssiges Abgasreinigungsadditiv einer Abgasbehandlungsvorrichtung zugeführt werden kann, wobei eine ausreichende Verdampfung von flüssigem Abgasreinigungsadditiv in der Abgasbehandlungsvorrichtung erfolgt. Eine ausreichende Verdampfung wird durch die Erfindung insbesondere auch unter Kaltstartbedingungen einer Verbrennungskraftmaschine und mit einem möglichst geringen Einsatz von Heizenergie erreicht.

Diese Aufgaben werden gelöst mit einer Abgasreinigungskomponente gemäß den Merkmalen des Anspruchs 1. Weitere vorteilhafte Ausgestaltungen der Erfindung sind in den abhängig formulierten Patentansprüchen angegeben. Die in den Patentansprüchen einzeln aufgeführten Merkmale sind in beliebiger technologisch sinnvoller Weise miteinander kombinierbar und können durch erläuternde Sachverhalte aus der Beschreibung ergänzt werden, wobei weitere Ausführungsvarianten der Erfindung aufgezeigt werden.

Die Erfindung betrifft eine Abgasreinigungskomponente, aufweisend ein Gehäuse mit einer Einströmöffnung und einer Ausströmöffnung, einem in dem Gehäuse angeordneten ersten Wabenkörper mit einem Mantel, wobei der Mantel eine innerhalb des Gehäuses von Abgas überströmbare Außenfläche hat, und außerdem aufweisend eine Zugabevorrichtung, mit der ein Abgasreinigungsadditiv auf die Außenfläche des Mantels zugebbar ist.

Die Abgasreinigungskomponente ist insbesondere ein beliebiger Abschnitt einer Abgasleitung, wobei das Gehäuse dann die Wandung der Abgasleitung bildet. Die Abgasreinigungskomponente kann über die Einströmöffnung oder die Ausströmöffnung mit weiteren Abschnitten einer Abgasleitung verbunden werden und so in eine Abgasbehandlungsvorrichtung integriert werden. Eine Abgasströmungsrichtung ist hier immer als eine Strömungsrichtung des Abgases von der Einströmöffnung des Gehäuses zu der Ausströmöffnung des Gehäuses definiert.

Der in dem Gehäuse angeordnete Wabenkörper ist insbesondere ein metallsicher Wabenkörper, welcher beispielsweise aus metallischen Folien hergestellt sein kann, wobei insbesondere wechselweise gewellte und glatte metallische Folien aufeinander gestapelt sein können, um eine wabenförmige Kanalstruktur in dem Wabenkörper zu bilden. Es ist aber auch möglich, dass der Wabenkörper ein keramischer Wabenkörper ist, der beispielsweise durch Extrusion hergestellt sein kann. Der Mantel wird insbesondere von einer umlaufenden Wandung gebildet, welche den Wabenkörper nach Art einer Umfangsfläche umgibt. Der Wabenkörper hat vorzugsweise eine Einströmfläche, über welche Abgas in den Wabenkörper einströmen kann und eine Ausströmfläche, über welche Abgas aus dem Wabenkörper wieder austreten kann. Zwischen der Einströmfläche und der Ausströmfläche erstreckt sich der Mantel und bildet eine Begrenzung des Wabenkörpers. Bei einem metallischen Wabenkörper ist der Mantel vorzugsweise in Form eines Metallrohrs gebildet, welches eine größere Wandstärke hat, als die metallischen Folien, mit welchen die Wabenstruktur des Wabenkörpers gebildet ist. Beispielsweise haben die metallischen Folien eine Dicke zwischen 20 µm [Mikrometer] und 100 µm, während der Mantel des Wabenkörpers eine Dicke von zwischen 500 µm und 2 mm [Millimeter] hat. Der Mantel gibt dem Wabenkörper somit auch eine mechanische Stabilität. Ein solcher metallischer Mantel kann auch bei einem keramischen Wabenkörper vorgesehen sein. Bevorzugt ist für die Abgasreinigungskomponente allerdings ein metallischer Wabenkörper, weil bei einem metallischen Wabenkörper normalerweise ein besserer Wärmetransport von der Wabenstruktur des Wabenkörpers hin zu dem Mantel und der Außenfläche des Mantels auftritt. Ein solcher Wärmetransport ist bei der Abgasreinigungskomponente erwünscht, damit auf die Außenfläche auftreffendes Abgasreinigungsadditiv an der Au-ßenfläche effektiv verdampft.

Die Zugabevorrichtung ist insbesondere ein Injektor mit einer Düse, mit welcher flüssiges Abgasreinigungsadditiv zerstäubt in das Gehäuse der Abgasreinigungskomponente zugegeben werden kann. Vorzugsweise durchdringen der Injektor bzw. die Düse der Zugabevorrichtung das Gehäuse der Abgasreinigungskomponente an einer Stelle, so dass ein Abschnitt der Zugabevorrichtung au-ßerhalb des Gehäuses zugänglich ist, und so dass an der Zugabevorrichtung eine Leitung anschließbar ist, über welche die Zugabevorrichtung mit dem flüssigen Abgasreinigungsadditiv versorgt werden kann. Die Zugabevorrichtung, bzw. eine Düse der Zugabevorrichtung erzeugt vorzugsweise einen Sprühkegel mit dem das flüssige Abgasreinigungsadditiv in der Abgasbehandlungsvorrichtung versprüht wird. Die Zugabevorrichtung ist derart ausgerichtet, dass der Sprühkegel auf die Außenfläche des Mantels auftrifft.

Die Außenfläche des Mantels des Wabenkörpers wird üblicherweise dadurch erwärmt, dass Abgas durch den Wabenkörper strömt. Der Wabenkörper kann beispielsweise ein Katalysatorträgerkörper (insbesondere ein Oxidationskatalysator) sein, mit welchem Abgasbestandteile in dem Abgas der Verbrennungskraftmaschine oxidiert werden. Dies bewirkt eine Temperaturerhöhung in dem Wabenkörper, wenn warme Abgase durch den Wabenkörper strömen. Der Wabenkörper heizt daher die Mantelfläche und die Außenfläche auf. Zusätzlich ist die Mantelfläche üblicherweise besonders warm, weil die Mantelfläche und die Außenfläche im Bereich der Zugabevorrichtung vollständig innerhalb des Gehäuses der Abgasreinigungskomponente angeordnet ist und in keinem direkten Kontakt zu einer Außenwand des Gehäuses steht. Ein Spaltraum zwischen dem Gehäuse und der Mantelfläche wirkt dementsprechend wie eine Art thermische Isolierung, welche die Mantelfläche vor einer Abkühlung schützt. Aus diesem Grund ermöglicht die überströmbare Außenfläche innerhalb eines Gehäuses in der Abgasreinigungskomponente eine besonders sichere und zuverlässige Verdampfung von flüssigem Abgasreinigungsadditiv. Die Abgasreinigungskomponente ist insbesondere zur Zugabe von Harnstoff-Wasser-Lösung als flüssigem Abgasreinigungsadditiv geeignet.

Die erfindungsgemäßen Abgasreinigungskomponente ist so ausgestaltet, dass zwischen der Außenfläche des Mantels und dem Gehäuse mindestens ein Bypasskanal ausgebildet ist, durch welchen ein Abgasteilstrom eines von der Einströmöffnung zu der Ausströmöffnung strömenden Abgasstroms den ersten Wabenkörper bypassen kann, wobei die Zugabevorrichtung an dem Bypasskanal angeordnet ist, so dass das Abgasreinigungsadditiv in den Bypasskanal zugebbar ist.

Der erste Wabenkörper ist bei der erfindungsgemäßen Abgasreinigungskomponente so ausgeführt, dass er eine Querschnittsfläche des Gehäuses nicht vollständig ausfüllt. Ein Spaltraum zwischen dem ersten Wabenkörper und dem Gehäuse bildet somit den hier beschriebenen Bypasskanal. Der Abgasstrom, welcher an der Einströmöffnung in das Gehäuse eintritt, wird demnach in einen Abgashauptstrom und einen Abgasteilstrom unterteilt, wobei der Abgashauptstrom durch den ersten Wabenkörper strömt, während der Abgasteilstrom durch den beschriebenen Bypass strömt. Dabei überströmt der beschriebene Abgasteilstrom die Außenfläche des Mantels. Das flüssige Abgasreinigungsadditiv, welches der Abgasbehandlungskomponente mit der Zugabevorrichtung zugeführt wird, gerät somit zunächst nur in Kontakt mit dem Abgasteilstrom. Der Abgasteilstrom und der Abgashauptstrom werden anschließend (in einer Abgasströmungsrichtung hinter dem ersten Wabenkörper) wieder miteinander zusammengeführt. Die Aufteilung des Abgasstroms in einen Abgashauptstrom und in einen Abgasteilstrom, in welchem das flüssige Abgasreinigungsadditiv zugegeben wird, ermöglicht es, den Abgasteilstrom zielgerichtet zu beeinflussen, damit die Zugabe des Abgasreinigungsadditivs in den Abgasteilstrom in besonders vorteilhafter Weise erfolgen kann.

Weiterhin ist die erfindungsgemäße Abgasreinigungskomponente so ausgestaltet, dass in dem Bypasskanal ein zweiter Wabenkörper angeordnet ist, durch welchen der durch den Bypasskanal strömende Abgasteilstrom strömt.

Der zweite Wabenkörper ist in einer Abgasströmungsrichtung vor der Zugabevorrichtung angeordnet. Der den Bypasskanal bildende Spaltraum ist vorzugsweise von dem zweiten Wabenkörper vollständig abgedeckt, so dass der durch den Bypasskanal strömende Abgasteilstrom von dem zweiten Wabenkörper vollständig beeinflusst wird. Ein solcher zweiter Wabenkörper in dem Bypasskanal in Strömungsrichtung vor der Zugabevorrichtung ermöglicht eine zielgerichtete Beeinflussung des Abgasteilstroms. Dazu kann der zweite Wabenkörper beispielsweise eine katalytisch wirksame Beschichtung aufweisen, bevorzugt eine oxidativ wirkende Beschichtung. Ein zweiter Wabenkörper kann auch in einer Abgasströmungsrichtung hinter der Zugabevorrichtung angeordnet sein. Ein dort angeordneter zweiter Wabenkörper kann beispielsweise eine Hydrolysebeschichtung aufweisen, mit der die Umsetzung von flüssigem Abgasreinigungsadditiv verbessert werden kann. Mit einer Hydrolysebeschichtung kann beispielsweise die Umsetzung von Harnstoff in Ammoniak unterstützt werden.

Außerdem vorteilhaft ist die Abgasreinigungskomponente, wenn in dem Bypasskanal in Abgasströmungsrichtung vor der Zugabevorrichtung ein Heizer angeordnet ist, durch welchen der durch den Bypasskanal strömende Abgasteilstrom beheizbar ist.

Für die erfolgreiche Verdampfung von Abgasreinigungsadditiv in einer Abgasbehandlungsvorrichtung ist insbesondere die Temperatur der Abgase in der Abgasbehandlungsvorrichtung entscheidend. Durch einen Heizer kann die Temperatur der Abgase vor der Zugabevorrichtung zielgerichtet erhöht werden. Besonders vorteilhaft ist es, einen Heizer in einem Bypasskanal anzuordnen, weil hierdurch ermöglicht wird, nur einen durch den Bypasskanal strömenden Abgasteilstrom zu beheizen. Dies reduziert die von dem Heizer benötigte Heizenergie.

Der Heizer ist insbesondere ein elektrischer Heizer, welcher beispielsweise nach Art eines elektrisch beheizbaren Wabenkörpers ausgeführt sein kann. Ein solcher elektrisch beheizbarer Wabenkörper kann beispielsweise aus einem von elektrischem Strom durchflossenen Paket aus gewellten und glatten metallischen Folien gebildet sein. Der Heizer kann aber auch ein beliebiger anderer Heizer sein, beispielsweise ein Wärmetauscher oder ein Brenner.

Ein Heizer in dem Bypasskanal wirkt in besonders vorteilhafter Weise mit der Außenfläche eines Mantels des ersten Wabenkörpers als Auftrefffläche für das flüssige Abgasreinigungsadditiv zusammen, weil die Temperatur, welche zur ausreichenden Verdampfung des flüssigen Abgasreinigungsadditivs notwendig ist, wahlweise mit den Abgasen oder mit dem Heizer erreicht werden kann. Dies ermöglicht einen besonders sparsamen Betrieb des Heizers, bei welchem der Heizer regelmäßig nur dann aktiviert wird, wenn eine ausreichende Temperatur mit den Abgasen nicht realisierbar ist.

Weiterhin vorteilhaft ist die Abgasreinigungskomponente, wenn in einem Auftreffbereich der Außenfläche des Mantels, in welchem mit der Zugabevorrichtung zugegebenes Abgasreinigungsadditiv auftritt, eine Flächenheizung angeordnet ist, mit welcher die Außenfläche des Mantels beheizbar ist.

Eine solche Flächenheizung kann beispielsweise in Form von elektrischen Leiterbahnen realisiert sein, die auf der Außenfläche des Mantels angeordnet sind. Eine solche Flächenheizung kann genutzt werden, um den Mantel gezielt zu beheizen, wenn durch die in die Abgasreinigungskomponente einströmenden Abgase keine ausreichende Temperaturerhöhung gewährleistet wird. Leiterbahnen können auf dem Mantel beispielsweise aufgedruckt oder aufgeklebt sein.

Weiterhin vorteilhaft ist die Abgasreinigungskomponente, wenn in einer Abgasströmungsrichtung vor dem Bypasskanal und dem ersten Wabenkörper ein Heizer angeordnet ist, mit welchem sowohl ein durch den Bypasskanal strömender Abgasteilstrom als auch ein durch den ersten Wabenkörper strömender Abgashauptstrom des Abgasstroms beheizbar ist.

Ein solcher gemeinsamer Heizer überspannt vorzugsweise die gesamte Querschnittsfläche des Gehäuses. Ein solcher gemeinsamer Heizer ist insbesondere dann vorteilhaft, wenn auch für die in dem ersten Wabenkörper stattfindenden katalytischen Prozesse eine Mindesttemperatur notwendig ist. Dann kann der Heizer dazu genutzt werden, um auch die Temperatur der Abgase des Abgashauptstroms zu erhöhen.

Weiterhin vorteilhaft ist die Abgasreinigungskomponente, wenn der erste Wabenkörper so angeordnet ist, dass ein durch die Einströmöffnung in die Abgasreinigungskomponente einströmender Abgasstrom den ersten Wabenkörper vollständig durchströmt, wobei die Abgasreinigungskomponente weiter mindestens eine Umlenkvorrichtung aufweist, mit welchem ein aus dem ersten Wabenkörper ausströmender Abgasstrom derart umgelenkt wird, dass die Außenfläche des Mantels überströmt wird.

Die Umlenkvorrichtung ist insbesondere ein Umlenkblech, welches in dem Gehäuse angeordnet ist und die aus dem ersten Wabenkörper austretenden Abgase umlenkt. Bei dieser Ausführungsvariante der Abgasreinigungskomponente erfolgt vor dem ersten Wabenkörper keine Aufteilung des Abgasstroms in einen Abgashauptstrom und in einen Abgasteilstrom. Vielmehr durchströmt der Abgasstrom den ersten Wabenkörper vollständig. Erst anschließend erfolgt eine Umlenkung des Abgasstroms mit dem mindestens einen Umlenkblech derart, dass der Abgasstrom hin zu der Außenfläche des Mantels gelenkt wird. Dies ermöglicht es, sicherzustellen, dass das an der Außenfläche strömende Abgas bereits durch den ersten Wabenkörper beeinflusst wurde bevor die Außenfläche des Mantels von dem Abgas überströmt wird. Insbesondere ist dies vorteilhaft, wenn in dem ersten Wabenkörper eine Temperaturerhöhung des Abgases erreicht wird.

Vorzugsweise existiert um den Wabenkörper herum dann ein Ringraum, über welchen das Abgas, welches über die Außenfläche des Mantels geströmt ist, hin zu der Ausströmöffnung umgelenkt wird.

Vorzugsweise existiert außerdem eine umlaufende Abdichtung, mit der das Gehäuse an der Mantelfläche des Wabenkörpers anliegt, und durch welche der Wabenkörper in dem Gehäuse gehalten wird. Eine solche Abdichtung kann beispielsweise durch eine umlaufende Sicke des Gehäuses gebildet sein.

Weiterhin vorteilhaft ist die Abgasreinigungskomponente, wenn an der mindestens einen Umlenkvorrichtung mindestens ein Bypasskanal ausgebildet ist, durch welchen ein Abgasteilstrom des aus dem ersten Wabenkörper ausströmenden Abgasstroms zu einer Ausströmöffnung für das Gehäuse strömen kann, ohne die Außenfläche des Mantels zu überströmen.

Ein derartiger Bypass kann beispielsweise in Form einer Perforation in dem Umlenkblech bereitgestellt werden. Ein derartiger Bypass hinter dem ersten Wabenkörper ermöglicht es, sicherzustellen, dass nicht der vollständige Abgasstrom an der Außenfläche und der Zugabevorrichtung der Abgasreinigungskomponente vorbeiströmt. Dies ist insbesondere dann sinnvoll, wenn hierdurch zu hohe Strömungsgeschwindigkeiten an der Außenfläche und an der Zugabevorrichtung auftreten würden. Solche zu hohen Strömungsgeschwindigkeiten könnten zu geringen Verweilzeiten des zugegebenen flüssigen Abgasreinigungsadditivs an der Mantelfläche führen, so dass das flüssige Abgasreinigungsadditiv hier nicht vollständig verdampft. Der Bypass wirkt somit nach Art einer Regulierung, durch welche die Geschwindigkeit und der Druck der Abgasströmung, welche die Außenfläche des Mantels an der Zugabevorrichtung überströmt, reguliert werden.

Hier auch beschrieben werden soll ein Kraftfahrzeug, aufweisend eine Verbrennungskraftmaschine und eine Abgasbehandlungsvorrichtung zur Reinigung der Abgase der Verbrennungskraftmaschine mit mindestens einer Abgasreinigungskomponente der hier beschriebenen Art.

In Abgasströmungsrichtung hinter der Abgasreinigungskomponente ist in der Abgasbehandlungsvorrichtung vorzugsweise ein SCR-Katalysator angeordnet, wobei mit dem SCR-Katalysator und dem über die Abgasreinigungskomponente zugegebenen Abgasreinigungsadditiv das Verfahren der selektiven katalytischen Reduktion durchgeführt werden kann.

Die Erfindung sowie das technische Umfeld werden nachfolgend anhand der Figuren näher erläutert. Die Figuren zeigen besonders bevorzugte Ausführungsbeispiele, auf die die Erfindung jedoch nicht beschränkt ist. Insbesondere ist darauf hinzuweisen, dass die Figuren und insbesondere die in den Figuren dargestellten Größenverhältnissen nur schematisch sind. Es zeigen:
Fig. 1 eine erste Ausführungsvariante einer beschriebenen Abgasreinigungskomponente,
Fig. 2 eine zweite Ausführungsvariante einer beschriebenen Abgasreinigungskomponente,
Fig. 3 eine dritte Ausführungsvariante einer beschriebenen Abgasreinigungskomponente,
Fig. 4 eine nicht erfindungsgemäße Abgasreinigungskomponente,
Fig. 5 einen Querschnitt durch die nicht erfindungsgemäße Abgasreinigungskomponente, und
Fig. 6 ein Kraftfahrzeug, aufweisend eine beschriebene Abgasreinigungskomponente.

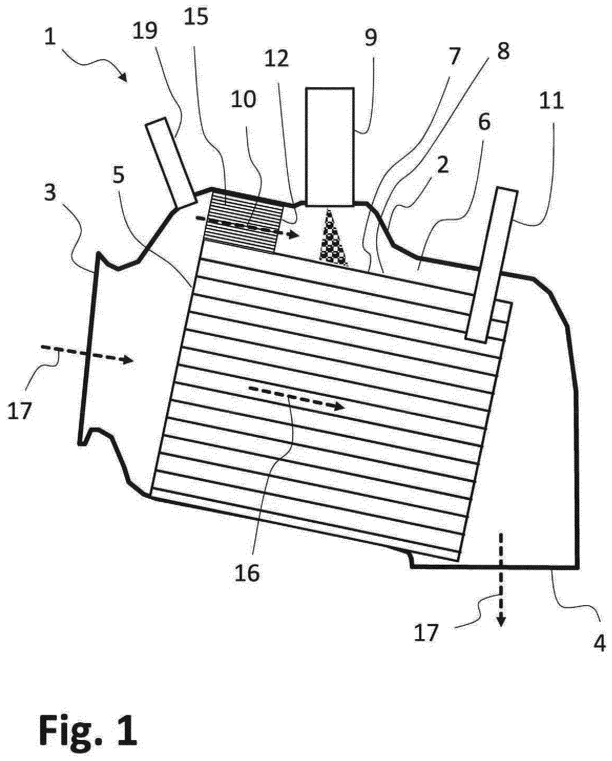

In der der Fig. 1 ist eine erfindungsgemäße Abgasreinigungskomponente 1 dargestellt. Die dargestellte erfindungsgemäße Abgasreinigungskomponente 1 hat ein Gehäuse 2 mit einer Einströmöffnung 3, durch welche ein Abgasstrom 17 in die Abgasreinigungskomponente 1 einströmen kann und einer Ausströmöffnung 4, durch welche der Abgasstrom 17 aus der Abgasreinigungskomponente 1 ausströmen kann. In den Abgasreinigungskomponenten 1 ist ein erster Wabenkörper 5 angeordnet, der von dem Abgas durchströmt werden kann.

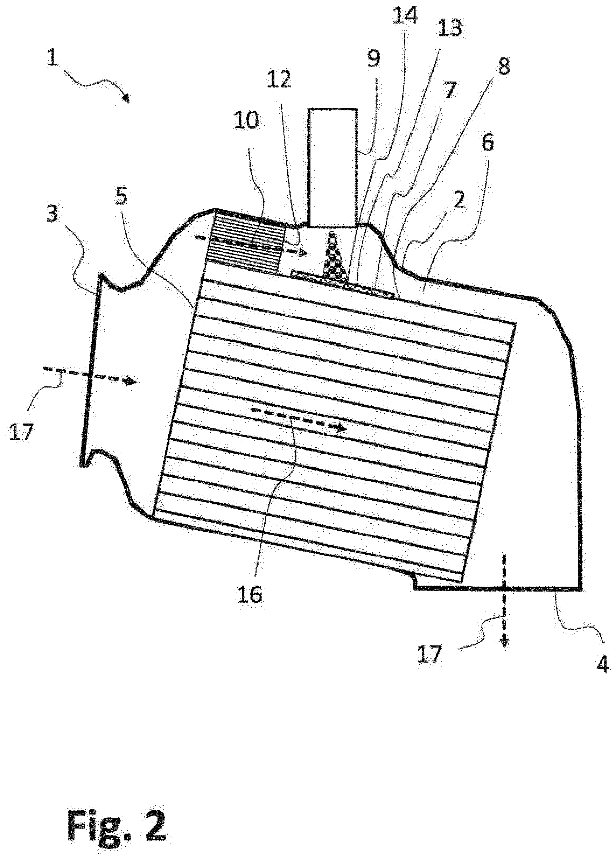

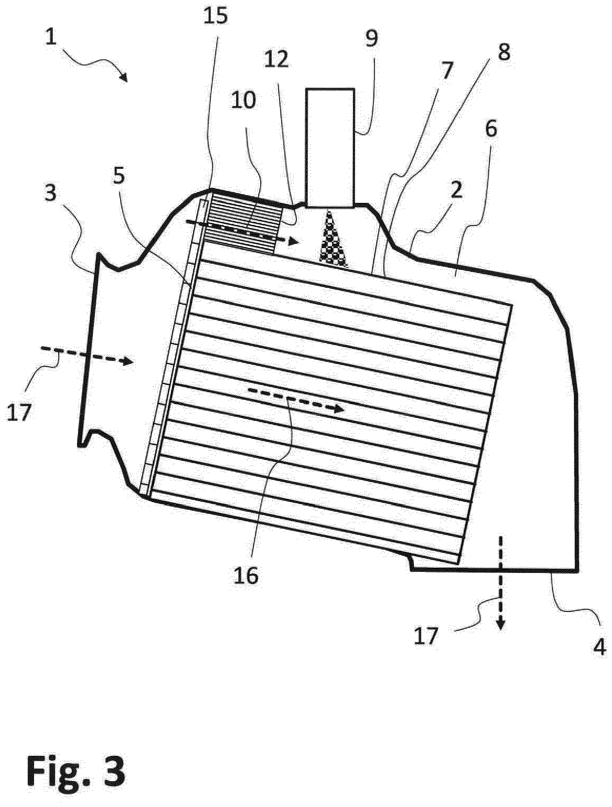

Weiterhin ist jeweils eine Zugabevorrichtung 9 vorgesehen, mit welcher flüssiges Abgasreinigungsadditiv auf eine Außenfläche 8 eines Mantels 7 des ersten Wabenkörpers 5 zugegeben werden kann. Darüber hinaus zeigt die erfindungsgemäße Abgasreinigungskomponente in der Fig. 1 beispielhaft einen Lambdasensor 19 und einen Temperatursensor 11, mit welchem die Funktionen der Abgasreinigungskomponente 1 überwacht werden können. Dabei ist der Lambdasensor 19 in einer Abgasströmungsrichtung von der Einströmöffnung 3 zu der Ausströmöffnung 4 vor dem ersten Wabenkörper 5 angeordnet. Der Temperatursensor 11 erstreckt sich durch das Gehäuse 2 in den ersten Wabenkörper 5 hinein, um die Temperatur in dem ersten Wabenkörper 5 überwachen zu können. Der Lambdasensor 19 überwacht den Lambdawert in einem Bereich der Abgasreinigungskomponente 1 vor dem ersten Wabenkörper 5. Sowohl der Lambdasensor 19 als auch der Temperatursensor 11 sind in der Figur 1 nur beispielhaft dargestellt und soll verdeutlichen, dass der Fachmann beliebige Sensoren an der Abgasreinigungskomponente 1 anordnen kann. Die erfindungsgemäße Abgasreinigungskomponente benötigt diese Sensoren nicht. Diese Sensoren können aber auch die Ausführungsbeispiele gemäß den Figuren 2 und 3 übertragen werden.

In den Fig. 1 bis 3 ist jeweils ein Bypasskanal 6 vorgesehen, welcher zwischen der Außenfläche 8 des Mantels 7 des ersten Wabenkörpers 5 und dem Gehäuse 2 verläuft, und durch welchen ein Abgasteilstrom 10 des Abgasstroms 17 strömt. Ein Abgashauptstrom 16 durchströmt jeweils den ersten Wabenkörper 5. Der Abgasstrom 17 wird durch den ersten Wabenkörper 5 in den Abgasteilstrom 10 und den Abgashauptstrom 16 unterteilt. Der Bypasskanal 6 wird durch einen Spaltraum zwischen dem ersten Wabenkörper 5 und dem Gehäuse 2 bzw. zwischen dem Mantel 7 und dem Gehäuse 2 gebildet.

Gemäß Fig. 1 ist in dem Bypasskanal 6 in Abgasströmungsrichtung vor der Zugabevorrichtung 9 ein zweiter Wabenkörper 12 vorgesehen. Beispielhaft ist in Fig. 1 gezeigt, dass dieser zweite Wabenkörper 12 ein Heizer 15 ist, mit welchem der Abgasteilstrom 10, welcher durch den Bypass 6 strömt, aufgeheizt werden kann. Der zweite Wabenkörper 12 kann aber auch ein "üblicher" Katalysatorträgerkörper mit einer katalytisch wirksamen Beschichtung sein, durch welchen eine Temperaturerhöhung in dem Abgasteilstrom 10 bewirkt wird.

Gemäß Fig. 2 ist ebenfalls ein zweiter Wabenkörper 12 in dem Bypasskanal 6 vor der Zugabevorrichtung 9 angeordnet. Hier existiert aber zusätzlich eine Flächenheizung 14, welche auf der Außenfläche 8 des Mantels 7 in einem Auftreffbereich 13 angeordnet ist. In diesem Auftreffbereich tritt das mit der Zugabevorrichtung 9 hinzugegebene flüssige Abgasreinigungsadditiv auf die Außenfläche 8 des Mantels 7 auf. Diese Flächenheizung 14 kann bspw. als elektrische Heizung ausgeführt sein, die von elektrischen Leiterbahnen auf der Außenfläche 8 des Mantels 7 gebildet ist. Solche Leiterbahnen können hier beispielsweise aufgedruckt oder aufgeklebt sein. Solche Leiterbahnen sollten insbesondere hochtemperaturfest sein, um durch die Temperaturen in der Abgasreinigungskomponente nicht beschädigt zu werden.

Gemäß der Ausführungsvariante in Fig. 3 ist in dem Bypasskanal 6 ebenfalls ein zweiter Wabenkörper 12 angeordnet. Darüber hinaus existiert gemäß Fig. 3 ein Heizer 15, welcher sich über den gesamten Querschnitt des Gehäuses 2 erstreckt und welcher damit sowohl den Bypasskanal 6 (durch welchen der Abgasteilstrom 10 strömt) als auch den ersten Wabenkörper 5 (durch welchen der Abgashauptstrom 15 strömt) abdeckt. Damit werden sowohl der Abgashauptstrom 16 als auch der Abgasteilstrom 10 mit dem Heizer 15 aufgeheizt. Auch dieser Heizer 15 kann vorzugsweise als elektrisch beheizbarer Wabenkörper ausgeführt sein.

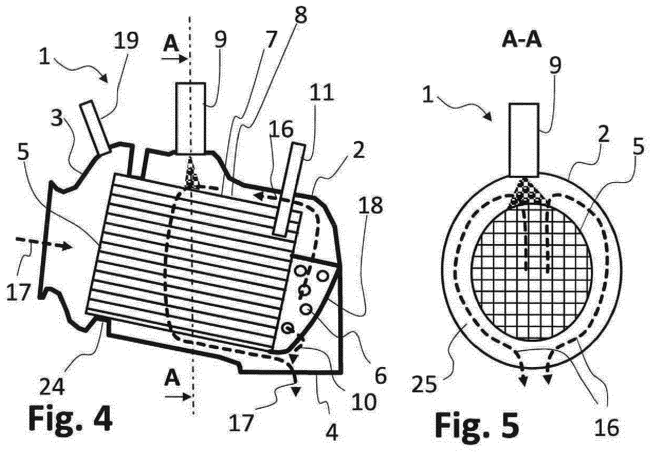

Fig. 4 zeigt zusammen mit Fig. 5 eine nicht erfindungsgemäße Abgasreinigungskomponente 1, bei welcher der Abgasstrom 17 zunächst (vor Durchströmen des ersten Wabenkörpers 5) nicht in einen Abgashauptstrom und in einen Abgasteilstrom unterteilt wird. Vielmehr ist der erste Wabenkörper 5 an dem Gehäuse 2 mit einer Abdichtung 24 abgedichtet, welche hier als umlaufende Sicke des Gehäuses 2 ausgeführt ist. Diese als umlaufende Sicke ausgeführte Abdichtung 24 liegt an der Mantelfläche 7 des ersten Wabenkörpers 5 an und ist dort abdichtet. Die als Sicke ausgeführte Abdichtung 24 fixiert den ersten Wabenkörper 5 innerhalb des Gehäuses 2 auch mechanisch. Nach dem Ausströmen des Abgases aus dem ersten Wabenkörper 5 wird das Abgas von einem Umlenkvorrichtung 18 umgelenkt, so dass es hin zu der Außenfläche 8 des Mantels 7 gelenkt wird. Dabei überströmt das Abgas auch einen Bereich der Außenfläche 8 des Mantels 7, in welchem Abgasreinigungsadditiv mit der Zugabevorrichtung 9 auf die Außenfläche 8 des Mantels 7 zugegeben wird.

Fig. 5 zeigt einen Schnitt durch die Fig. 4 entlang der Schnittlinie A-A. In Fig. 5 ist zu erkennen, dass außen um den ersten Wabenkörper 5 herum, bzw. zwischen dem ersten Wabenkörper 5 und dem Gehäuse 2, ein Ringraum 25 existiert, durch welchen das umgelenkte Abgas in Richtung zu der in Fig. 4 dargestellten Ausströmöffnung 4 der nicht erfindungsgemäßen Abgasreinigungskomponente 1 gelenkt werden kann.

Die als Sicke ausgeführte Abdichtung 24 hält den ersten Wabenkörper 5 dabei in dem Gehäuse 2 fest und schließt den Ringraum 25 gegenüber der Einströmöffnung 3 der Abgasreinigungskomponente 1 ab. Bei der nicht erfindungsgemäßen Abgasreinigungskomponente 1 gemäß den Fig. 4 und 5 ist darüber hinaus hinter dem ersten Wabenkörper 5 ein Bypass 6 vorgesehen, durch welchen ein Abgasteilstrom 10 abströmen kann, welcher nicht zu der Zugabevorrichtung 9 fließt. Bei dieser nicht erfindungsgemäßen Abgasreinigungskomponente fließt ein Abgashauptstrom 16 zu der Zugabevorrichtung 9. Dies unterscheidet die nicht erfindungsgemäße Abgasreinigungskomponente gemäß den Fig. 4 und 5 von erfindungsgemäßen Ausführungsvarianten gemäß den Fig. 1 bis 3. Dieser Bypasskanal 6 kann in Form von einer Perforation der Umlenkvorrichtung 18 gebildet werden. Dieser Bypasskanal 6 ist nur eine besondere Variante die bei der nicht erfindungsgemäßen Abgasreinigungskomponente gemäß den Fig. 4 und 5 nicht vorhanden sein muss.

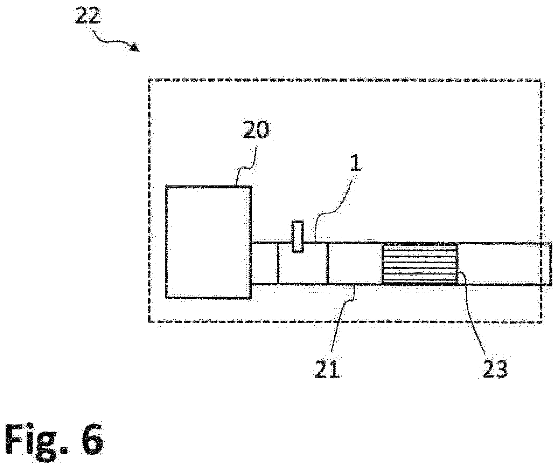

Fig. 6 zeigt ein Kraftfahrzeug 22 mit einer Verbrennungskraftmaschine 20 und einer Abgasbehandlungsvorrichtung 21, mit welcher die Abgase der Verbrennungskraftmaschine 20 gereinigt werden. Die Abgasbehandlungsvorrichtung 21 weist eine Abgasreinigungskomponente 1 der hier beschriebenen Art auf. Die Abgabehandlungsvorrichtung 21 weist darüber hinaus einen SCR-Katalysator 23 auf, mit welchem das Verfahren der selektiven katalytischen Reduktion unter Zuhilfenahme eines Abgasreinigungsadditivs durchgeführt werden kann, wobei das Abgasreinigungsadditiv mit Hilfe der beschriebenen Abgasreinigungskomponente 1 der Abgasbehandlungsvorrichtung 21 zugeführt wird.

## Patentansprüche

1. Abgasreinigungskomponente (1), aufweisend ein Gehäuse (2) mit einer Einströmöffnung (3) und einer Ausströmöffnung (4), einen in dem Gehäuse (2) angeordneten ersten Wabenkörper (5) mit einem Mantel (7), wobei der Mantel (7) eine innerhalb des Gehäuses (2) von Abgas überströmbare Außenfläche (8) hat und außerdem aufweisend eine Zugabevorrichtung (9) mit der ein Abgasreinigungsadditiv auf die Außenfläche (8) des Mantels (7) zugebbar ist, wobei zwischen der Außenfläche (8) des Mantels (7) und dem Gehäuse (2) mindestens ein Bypasskanal (6) ausgebildet ist, durch welchen ein Abgasteilstrom (10) eines von der Einströmöffnung (3) zu der Ausströmöffnung (4) strömenden Abgasstroms (17) den ersten Wabenkörper (5) bypassen kann, wobei die Zugabevorrichtung (9) an dem Bypasskanal (6) angeordnet ist, so dass das Abgasreinigungsadditiv in den Bypasskanal (6) zugebbar ist, **dadurch gekennzeichnet, dass** in dem Bypasskanal (6) in einer Abgasströmungsrichtung vor der Zugabevorrichtung (9) ein zweiter Wabenkörper (12) angeordnet ist, durch welchen der durch den Bypasskanal (6) strömende Abgasteilstrom (10) strömt.

2. Abgasreinigungskomponente (1) nach Anspruch 1, wobei in dem Bypasskanal (6) in Abgasströmungsrichtung vor der Zugabevorrichtung (9) ein Heizer (15) angeordnet ist, durch welchen der durch den Bypasskanal strömende Abgasteilstrom (10) beheizbar ist.

3. Abgasreinigungskomponente (1) nach einem der Ansprüche 1 oder 2, wobei in einem Auftreffbereich (13) der Außenfläche (8) des Mantels (7), in welchem mit der Zugabevorrichtung (9) zugegebenes Abgasreinigungsadditiv auftritt, eine Flächenheizung (14) angeordnet ist, mit welcher die Außenfläche (8) des Mantels (7) beheizbar ist.

4. Abgasreinigungskomponente (1) nach einem der Ansprüche 1 bis 3, wobei in einer Abgasströmungsrichtung vor dem Bypasskanal (6) und dem ersten Wabenkörper (5) ein Heizer (15) angeordnet ist, mit welchem sowohl ein durch den Bypasskanal (6) strömender Abgasteilstrom (10) als auch ein durch den ersten Wabenkörper (5) strömender Abgashauptstrom (16) des Abgasstroms (17) beheizbar ist.

5. Abgasreinigungskomponente (1) nach Anspruch 1, wobei der erste Wabenkörper (5) so angeordnet ist, dass ein durch die Einströmöffnung (3) in die Abgasreinigungskomponente (1) einströmender Abgasstrom (17) den ersten Wabenkörper (5) vollständig durchströmt, wobei die Abgasreinigungskomponente (1) weiter mindestens ein Umlenkvorrichtung (18) aufweist, mit welchem ein aus dem ersten Wabenkörper (5) ausströmender Abgasstrom (17) derart umgelenkt wird, dass die Außenfläche (8) des Mantels (7) überströmt wird.

6. Abgasreinigungskomponente (1) nach Anspruch 5, wobei an der mindestens einen Umlenkvorrichtung (18) mindestens ein Bypasskanal (6) ausgebildet ist, durch welchen ein Abgasteilstrom (10) des aus dem ersten Wabenkörper (5) ausströmenden Abgasstrom (17) zu einer Ausströmöffnung (4) des Gehäuses (2) strömen kann, ohne die Außenfläche (8) des Mantels (7) zu überströmen.

7. Kraftfahrzeug (22), aufweisend eine Verbrennungskraftmaschine (20) und eine Abgasbehandlungsvorrichtung (21) zur Reinigung der Abgase der Verbrennungskraftmaschine (20) mit einer Abgasreinigungskomponente (1) nach einem der vorhergehenden Ansprüche.

## Claims

1. Exhaust gas cleaning component (1), having a housing (2) with an inflow port (3) and an outflow port (4), a first honeycomb body (5) arranged in the housing (2) and having a shell (7), wherein the shell (7) has an outer surface (8), over which exhaust gas can flow within the housing (2), and furthermore having a feed device (9), by means of which an exhaust gas cleaning additive can be fed onto the outer surface (8) of the shell (7), wherein at least one bypass duct (6) is formed between the outer surface (8) of the shell (7) and the housing (2), through which duct a partial exhaust gas flow (10) of an exhaust gas flow (17) flowing from the inflow port (3) to the outflow port (4) can bypass the first honeycomb body (5), wherein the feed device (9) is arranged on the bypass duct (6), allowing the exhaust gas cleaning additive to be fed into the bypass duct (6), **characterized in that** a second honeycomb body (12), through which the partial exhaust gas flow (10) flowing through the bypass duct (6) flows, is arranged in the bypass duct (6) ahead of the feed device (9) in an exhaust gas flow direction.

2. Exhaust gas cleaning component (1) according to Claim 1, wherein a heater (15), by means of which the partial exhaust gas flow (10) flowing through the bypass duct can be heated, is arranged in the bypass duct (6) ahead of the feed device (9) in the exhaust gas flow direction.

3. Exhaust gas cleaning component (1) according to either of Claims 1 or 2, wherein a surface heating system (14), by means of which the outer surface (8) of the shell (7) can be heated, is arranged in an impact region (13) of the outer surface (8) of the shell (7), in which exhaust gas cleaning additive fed in by means of the feed device (9) impinges.

4. Exhaust gas cleaning component (1) according to one of Claims 1 to 3, wherein a heater (15), by means of which both a partial exhaust gas flow (10) flowing through the bypass duct (6) and a main exhaust gas flow (16), flowing through the first honeycomb body (5), of the exhaust gas flow (17) can be heated, is arranged ahead of the bypass duct (6) and the first honeycomb body (5) in an exhaust gas flow direction.

5. Exhaust gas cleaning component (1) according to Claim 1, wherein the first honeycomb body (5) is arranged in such a way that all of an exhaust gas flow (17) flowing into the exhaust gas cleaning component (1) through the inflow port (3) flows through the first honeycomb body (5), wherein the exhaust gas cleaning component (1) furthermore has at least one deflection device (18), by means of which an exhaust gas flow (17) flowing out of the first honeycomb body (5) is deflected in such a way that there is flow over the outer surface (8) of the shell (7).

6. Exhaust gas cleaning component (1) according to Claim 5, wherein at least one bypass duct (6), through which a partial exhaust gas flow (10) of the exhaust gas flow (17) flowing out of the first honeycomb body (5) can flow to an outflow port (4) of the housing (2) without flowing over the outer surface (8) of the shell (7), is formed on the at least one deflection device (18).

7. Motor vehicle (22), having an internal combustion engine (20) and an exhaust gas treatment device (21) for cleaning the exhaust gases of the internal combustion engine (20) by means of an exhaust gas cleaning component (1) according to one of the preceding claims.

## Revendications

1. Composant de purification des gaz d'échappement (1), présentant un boîtier (2) avec une ouverture d'afflux (3) et une ouverture de sortie (4), un premier corps en nid d'abeilles (5) disposé dans le boîtier (2) avec une enveloppe (7), l'enveloppe (7) présentant une surface extérieure (8) sur laquelle peut s'écouler du gaz d'échappement à l'intérieur du boîtier (2) et présentant en outre un dispositif d'addition (9) avec lequel un additif de purification des gaz d'échappement peut être ajouté sur la surface extérieure (8) de l'enveloppe (7), au moins un canal de contournement (6) étant réalisé entre la surface extérieure (8) de l'enveloppe (7) et le boîtier (2), à travers lequel un courant partiel de gaz d'échappement (10) d'un courant de gaz d'échappement (17) s'écoulant depuis l'ouverture d'afflux (3) vers l'ouverture de sortie (4) peut passer en contournant le premier corps en nid d'abeilles (5), le dispositif d'addition (9) étant disposé au niveau du canal de contournement (6) de telle sorte que l'additif de purification des gaz d'échappement puisse être ajouté dans le canal de contournement (6), **caractérisé en ce qu'**un deuxième corps en nid d'abeilles (12) est disposé dans le canal de contournement (6) dans une direction d'écoulement des gaz d'échappement avant le dispositif d'addition (9), à travers lequel deuxième corps en nid d'abeilles s'écoule le courant partiel de gaz d'échappement (10) s'écoulant à travers le canal de contournement (6).

2. Composant de purification des gaz d'échappement (1) selon la revendication 1, dans lequel, dans le canal de contournement (6), dans la direction d'écoulement des gaz d'échappement avant le dispositif d'addition (9), est disposé un dispositif de chauffage (15) par le biais duquel le courant partiel de gaz d'échappement (10) s'écoulant à travers le canal de contournement peut être chauffé.

3. Composant de purification des gaz d'échappement (1) selon l'une quelconque des revendications 1 ou 2, dans lequel, dans une région d'incidence (13) de la surface extérieure (8) de l'enveloppe (7) sur laquelle parvient l'additif de purification des gaz d'échappement ajouté avec le dispositif d'addition (9), est disposé un dispositif de chauffage en surface (14) avec lequel la surface extérieure (8) de l'enveloppe (7) peut être chauffée.

4. Composant de purification des gaz d'échappement (1) selon l'une quelconque des revendications 1 à 3, dans lequel, dans une direction d'écoulement des gaz d'échappement avant le canal de contournement (6) et le premier corps en nid d'abeilles (5) est disposé un dispositif de chauffage (15) avec lequel à la fois un courant partiel de gaz d'échappement (10) s'écoulant à travers le canal de contournement (6) ainsi qu'un courant principal de gaz d'échappement (16) du courant de gaz d'échappement (17) s'écoulant à travers le premier corps en nid d'abeilles (5) peuvent être chauffés.

5. Composant de purification des gaz d'échappement (1) selon la revendication 1, dans lequel le premier corps en nid d'abeilles (5) est disposé de telle sorte qu'un courant de gaz d'échappement (17) s'écoulant à travers l'ouverture d'afflux (3) dans le composant de purification des gaz d'échappement (1) traverse complètement le premier corps en nid d'abeilles (5), le composant de purification des gaz d'échappement (1) présentant en outre au moins un dispositif de déviation (18) avec lequel un courant de gaz d'échappement (17) sortant du premier corps en nid d'abeilles (5) est dévié de telle sorte que la surface extérieure (8) de l'enveloppe (7) soit parcourue par l'écoulement.

6. Composant de purification des gaz d'échappement (1) selon la revendication 5, dans lequel au moins un canal de contournement (6) est réalisé au niveau de l'au moins un dispositif de déviation (18), à travers lequel peut s'écouler un courant partiel de gaz d'échappement (10) du courant de gaz d'échappement (17) s'écoulant hors du premier corps en nid d'abeilles (5) jusqu'à l'ouverture de sortie (4) du boîtier (2), sans s'écouler par-dessus la surface extérieure (8) de l'enveloppe (7) .

7. Véhicule automobile (22) présentant un moteur à combustion interne (20) et un dispositif de traitement des gaz d'échappement (21) pour le traitement des gaz d'échappement du moteur à combustion interne (20) avec un composant de purification des gaz d'échappement (1) selon l'une quelconque des revendications précédentes.
